# EUROPEAN PATENT APPLICATION

(11) **EP 2 597 607 A2**
(43) Date of publication of application: **29.05.2013**
(21) Application number: 11809863.1
(22) Date of filing: 20.07.2011
(51) Int. Cl.: G06Q 30/00

(54) **DEVICE FOR DISPLAYING CONTENT BY MEANS OF DESIGNATED WEBSITE AND DESIGNATED WEBPAGE RECOGNITION AND A METHOD FOR THE SAME**

(30) Priority: 21.07.2010 KR 20100070486
(71) Applicant: Park, Seong Kee, Seoul 158-775 (KR)
(72) Inventor: Park, Seong Kee, Seoul 158-775 (KR)
(74) Representative: Chaillot, Geneviève
(86) International application number: PCT/KR2011/005339
(87) International publication number: WO 2012/011736

(57) **Abstract**

The present invention relates to an apparatus and method for displaying content through recognition of a designated web site and web page.

The present invention provides an apparatus and method for displaying content through recognition of a designated web site and web page including an operating server which has a database storing information on at least one designated web site and web page as well as at least one advertisement content matched with the information and a user terminal which includes a user program provided by the operating server, characterized in that, when the user terminal senses a set mouse action within a set area in a web page of in a designated web site, advertisement content matched with the web page of in the designated web site is outputted.

## Description

### Technical Field

The present invention relates to an apparatus and method for outputting external content in a web site. Especially, the present invention relates to an apparatus and method for outputting content in a user terminal connected to at least one designated web site through sensing of a set mouse action and a set position or area in a web page.

### Background Art

As the Internet has been widely spread, a number of advertising methods using the Internet have been developed and used. A variety of advertisements are displayed in the Internet web sites through a method for exposing an advertisement matched with an entered search word, another banner advertising method in popular web sites, etc. Especially, one of methods for exposing advertisement content in a user terminal is to sense an action of a computer mouse pointer, and then expose advertisement content when the sensed action is a set one.

One of the advertising methods is disclosed in Korea Patent Publication Number 1020000054808 published on September 5, 2000, entitled 'Transparent Banner Advertisement Method Using Mousepointer'.

The published invention relates to a method for exposing a transparent banner advertisement using a mouse pointer in which a web server provides a transparent banner advertisement of each web site and, when a netizen moves a mouse onto a corresponding banner advertisement, the transparent banner advertisement shows up in a blank space of the web site, so that the netizen can see the corresponding banner advertisement. When a netizen puts his or her mouse pointer onto a transparent banner advertisement fixedly or randomly placed in a web site, the transparent banner advertisement shows up at a determined area of the corresponding web site. Accordingly, this draws the netizen's attention to the shown banner advertisement, so that an advertising effect may be improved, and consequently, advertising revenue may be earned much more because placing the transparent banner advertisement in the corresponding web site draws the netizen's attention.

However, an advertisement shows up when a mouse pointer is positioned in a particular web site, so that the published invention has a disadvantage that exposes the advertisement regardless of a user's intention. In addition, the published invention has another disadvantage that distracts the user's attention due to the advertisement showing up along a movement of the mouse pointer during web surfing.

Accordingly, it is required to develop an apparatus and method in which a user terminal recognizes a web site and web page designated by a server, a user sees an advertisement according to a particular action of a mouse pointer when desiring to do, and profits are earned when the user sees an advertisement.

### Disclosure

### Technical Problem

An object of the present invention was applied in order to solve the defects of the prior art, and to provide an apparatus and method which, in a designated web site and web page, exposes content through recognition of a set action of a mouse pointer and a set position or area in the web page, and provides profits when a user sees the content with his or her intention.

Another object of the present invention is to provide an apparatus and method which exposes a middle medium, e.g. a digital character, etc. through recognition of a designated web page of a designated web site, exposes content through the middle medium, and provides profits when a user sees the content with his or her intention.

### Technical Solution

In order to accomplish the above-mentioned objects of the present invention, the present invention provides an apparatus and method for displaying content through recognition of a designated web site and web page including a user terminal, an operating server which is connected to the user terminal via a communication network, and a database which stores a variety of data connected to the operating server, characterized in that the operating server includes a user program setting and storing unit which stores a program installed in the user terminal, an operating web site information storing unit which stores data of a web site providing service for the user terminal connected thereto, an advertisement rate charging processing unit which calculates advertisement rates to be paid by an advertiser, and a user point managing unit which manages user points; the database includes an advertisement database which stores at least one advertisement content, and a site database which has information on at least one web site and web page designated by the operating server and provides a table made by means of matching the advertisement content with the information on the web site and web page; and the user terminal includes a user program having a position recognizing module which tracks and recognizes a position of a mouse pointer, a mouse action recognizing module which senses actions of the mouse, e.g. clicking, etc., a middle medium storing module which stores middle media that are formed in various characters and implements an animated function on a computer screen, a designated site information storing module which recognizes information on web sites and web pages stored in the site database, a time checking module which measures exposure time of advertisement content exposed in the user terminal, and a user setting module which is used to set up a mouse action, etc.

### Advantageous Effects

The present invention implements an advertising apparatus and method which exposes content through recognition of a position and action of a mouse pointer in a designated web site and web page, or another advertising apparatus and method which exposes a middle medium, e.g. a digital character, etc. through recognition of a designated web page of a designated web site, expose content through the middle medium, and provides profits when a user sees the content with his or her intention, so that there is an effect that a user sees an advertisement when desiring to do, profits are earned by virtue of the user seeing the advertisement, and an advertiser can obtain a more improved advertising effect because the user seeing the advertisement with his or her intention pays more attention to the advertisement.

### Description of Drawings

FIG. 1 illustrates a configuration of an embodiment of an apparatus for displaying content through recognition of a designated web site and web page according to the present invention in a schematic view.
FIG. 2 illustrates an exemplary view of a matching table made by means of matching advertisement content with the designated web site or web page used in the embodiment of FIG. 1.
FIG. 3 illustrates a flow chart of an embodiment of a method for displaying content through recognition of a designated web site and web page.
FIG. 4 illustrates a flow chart of another embodiment of a method for displaying content through recognition of a designated web site and web page.

### Best Mode

Hereinafter, a configuration in relation to embodiments of the present invention is described in detail with reference to the accompanying drawings.

First, in order to facilitate understanding of the present invention, the definitions of the terms used in the present invention are given below. An operating web site refers to a one provided by an operating server of the present invention. A connected web site refers to a particular one to which a user terminal is connected. A web page or connected web page refers to a one in the connected web site. A designated web site and web page refers to information on at least one web site and web page which is stored after being matched with advertisement content in the operating server.

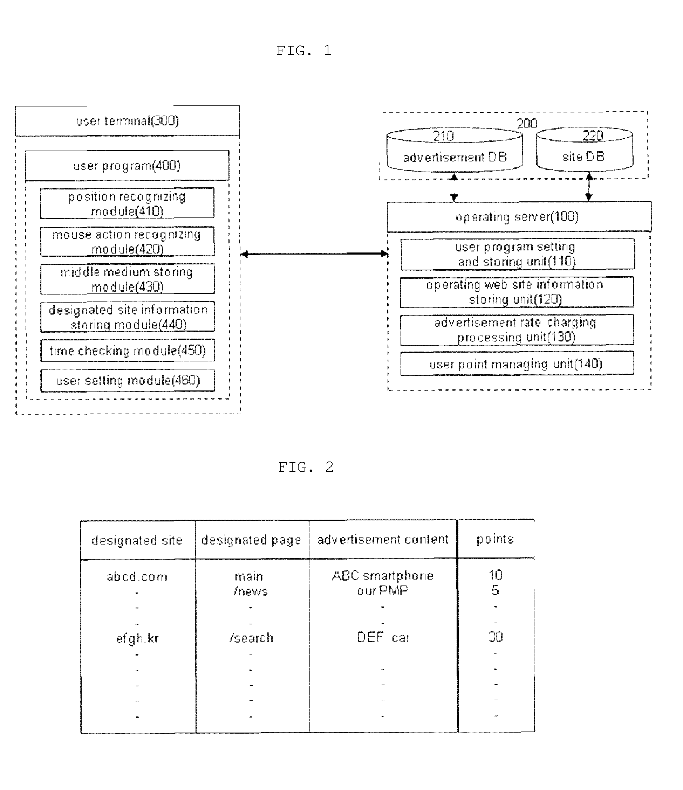

FIG. 1 illustrates a configuration of an embodiment of an apparatus for displaying content through recognition of a designated web site and web page according to the present invention in a schematic view. As shown in FIG. 1, an apparatus for displaying content through recognition of a designated web site and web page of the present invention includes a user terminal 300, an operating server 100 which is connected to the user terminal 300 via a communication network, and a database 200 which stores a variety of data connected to the operating server 100, wherein the operating server 100 includes a user program setting and storing unit 110 which sets and stores a user program installed in the user terminal 300, an operating web site information storing unit 120 which stores data of a web site providing service for the user terminal 300 connected thereto, an advertisement rate charging processing unit 130 which calculates advertisement rates to be paid by an advertiser, and a user point managing unit 140 which manages user points; the database 200 includes an advertisement database 210 which stores at least one advertisement content, and a site database 220 which has information on at least one web site and web page designated by the operating server 100 and provides a table made by means of matching the advertisement content with the information on the web site and web page; and the user terminal 300 includes a position recognizing module 410 which tracks and recognizes a position of a mouse pointer, a mouse action recognizing module 420 which senses actions of the mouse, e.g. clicking, etc., a middle medium storing module 430 which stores middle media that are formed in various characters, etc. and implements an animated function on a computer screen, a designated site information storing module 440 which recognizes information on web sites and web pages stored in the site database 220, a time checking module 450 which measures exposure time of advertisement content exposed in the user terminal 300, and a user setting module 460 which is used to set up a mouse action, etc., and besides, the user terminal includes a user program 400 connected to the operating server 100.

The user terminal 300 refers to a one which can be connected to the operating server 100 via a wired or wireless Internet communication means. The user terminal 300 may be one among a mobile phone, a smart phone, a personal digital assistant (PDA), a notebook computer, a personal computer (PC), a tablet PC, an Internet television (TV), or may be a one with a touch panel.

A user connects the user terminal 300 to an operating web site provided by the operating server 100. The operating web site installs the user program 400, which is stored in the user program setting and storing unit 110 of the operating server 100, in the user terminal 300. The user terminal 300 in which the user program 400 is installed is connected to any one web site. The designated site information storing module 440 of the user program 400 checks whether the connected web site is a one which is designated by the operating server 100. When the connected web site is a designated one, the mouse action recognizing module 420 senses an action generated by a mouse of the user terminal 300, e.g. clicking in a web site, etc., and then determines whether the sensed mouse action is set in the user program setting and storing unit 110 of the operating server 100 through the user program 400 or in the user setting module 460 by the user, and after that, when the sensed mouse action is determined as a set one, the position recognizing module 410 recognizes a position of a pointer of the mouse generating the sensed action in the web site. When the recognized position of the mouse pointer is within an area set by the user program 400, the user terminal 300 transmits a signal for requesting advertisement content including information on the connected web site and web page to the operating server 100. The operating server 100 receives the signal for requesting advertisement content from the user terminal 300, and then checks the information on the connected web site and web page, which are included in the signal for requesting advertisement content, in the site database and retrieves advertisement content matched with the connected web site and web page from the advertisement database 210, and after that, transmits the retrieved advertisement content to the user terminal 300. The user terminal 300 outputs the advertisement content transmitted from the operating server 100 at a determined position of the connected web page in a new window. Here, it is preferable to output the advertisement content at the position where a pointer of the mouse generating the sensed action is in a new window. When the advertisement content is fully outputted in the connected web page in a new window, the time checking module 450 of the user program 400 starts measuring time in which the advertisement content is outputted. Here, a timer may be so configured to be exposed at a particular position in the new window or the connected web page so that the user can check the outputted time. The time checking module 450 measures time by one second unit till the outputting of the advertisement content is terminated by a selection of the user, and then transmits time data to the operating server 100. The operating server 100 transmits the received time data to the advertisement rate charging processing unit 130 and the user point managing unit 140. The advertisement rate charging processing unit 130 calculates advertisement rates, based on the received time data, and then stores the calculated advertisement rates. Here, the advertisement rates may be calculated so as to be increased in proportion to the received time data, or to be fixed. When the advertisement rates to be charged are calculated in proportion to the time data, for example, a basic advertisement rate may be set by the five seconds and calculated up to five minutes, and then the calculated rates are stored.

The user point managing unit 140 calculates and accumulates user points, based on the received time data. Here, the user points may be set so as to be increased in proportion to time in the received time data or to be accumulated as fixed points. When the user points are calculated in proportion to the time data, a basic time unit may be set by the five seconds, thereby being accumulated every five seconds.

In the user terminal 300, a mouse action performed by the user may be set in the following examples: clicking on the mouse left button once, twice, three times, etc. In addition, when the sensed mouse action is a set one, the position recognizing module 410 recognizes that a pointer of the mouse generating the sensed action is at a set position in the web site. That is, a blank margin or a particular position in the web site is preset as a set position, and then, when the pointer of the mouse is located within the margin or at the particular position, the module recognizes the set position.

According to another embodiment different from the above-mentioned embodiment, in an apparatus for displaying content through recognition of a designated web site and web page of the present invention, the user terminal 300 in which the user program 400 is installed is connected to any one web site. The designated site information storing module 440 of the user program 400 checks whether the connected web site is a one which is designated by the operating server 100. When the connected web site is a designated one, the designated site information storing module checks whether a web page to which a user connects is the one, which is designated by the operating server 100, in the connected web site. When a currently-connected web page is the designated one, the middle medium storing module 430 of the user program 400 outputs a stored character form of middle medium in the web page. When a signal for the middle medium is inputted in the user terminal 300, or a certain length of time passes, the user terminal 300 transmits a signal for requesting advertisement content including information on the connected web site and web page to the operating server 100. The subsequent processes are so configured as to be identical to the described embodiment. The middle medium outputted in the connected web page may be outputted in the connected web page in such a manner that the operating server 100 further includes a middle medium storing unit, and then the operating server 100 transmits a middle medium to the user terminal 300. In addition, the middle medium may be implemented in character forms such as a butterfly, a light of a lighthouse, a whale, an airplane, a car, a parachute, etc., and may be so configured as to have an animation effect that the character forms are animated in the connected web page. Furthermore, when a signal for the middle medium is inputted or a certain length of time passes, the operating server 100 may order a designated event to occur in the web page, and then, when the event is terminated or another signal is inputted, the operating server 100 may transmit advertisement content so as to output the advertisement content in the web page.

The embodiment of the present invention may be so configured that, when a user sees the outputted advertisement content, user points are accumulated as described above and the user automatically enters for a gift event.

FIG. 2 illustrates an embodiment of a table made by means of matching advertisement content with designated web sites or web pages stored in the site database 220. As shown in FIG. 2, in the table stored in the site database 220 of the present invention, a main page, that is, a designated web page of a designated web site, e.g. 'abcd.com', is matched with advertisement content 'ABC smart phone', and, when a user sees the advertisement content 'ABC smart phone' in the main page of the designated web site, ten points are accumulated. In addition, the table is made in such a manner that advertisement content in relation to 'our PMP' is matched with a news page, that is, a designated page of the designated web site 'abcd.com', and, when the user sees the advertisement content, five points are accumulated. It is so configured that, when the user terminal 300 transmits a signal for requesting advertisement content, the table retrieves advertisement content matched with information on a corresponding designated web site and web page, based on the information on the designated web site and web page included in the signal for requesting advertisement content, and then transmits the retrieved advertisement content to the user terminal 300.

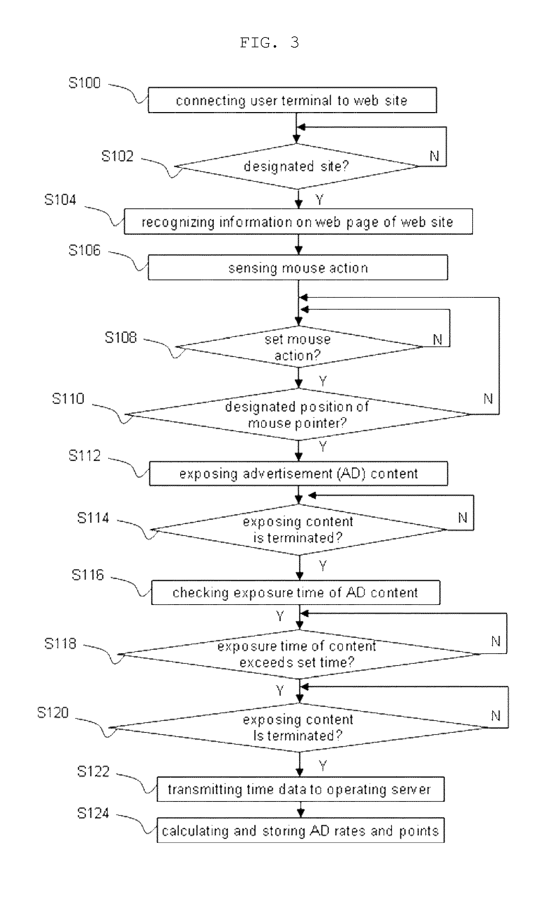

FIG. 3 illustrates a flow chart of an embodiment of a method for displaying content through recognition of a designated web site and web page of the present invention. As shown in FIG. 3, the method for displaying content through recognition of a designated web site and web page of the present invention includes connecting a user terminal to any one web site S100, at the user terminal, determining whether the connected web site corresponds to a designated site stored in an operating server S102, at the user terminal, recognizing information on a currently-connected web page when the connected web site is a designated one S104, at the user terminal, sensing an action of a mouse in the connected web page S106, at the user terminal, determining whether the sensed action of the mouse is a set one S108, at the user terminal, determining whether a position of a pointer of the mouse in the web page is a designated one when the sensed mouse action is determined as a set one S110, outputting advertisement content in the connected web page in a new window when the position of the pointer of the mouse generating the action is a designated one S112, at the user terminal, determining whether exposing the full advertisement content in the new window is terminated S114, at the user terminal, checking exposure time of the advertisement content when the exposing the advertisement content is terminated S116, at the user terminal, determining whether the exposure time of the advertisement content exceeds set time S118, at the user terminal, determining whether exposing the advertisement content is terminated when the advertisement content is exposed more than the set time S120, at the user terminal, transmitting time data in relation to the sensed exposure time of the advertisement content to the operating server when exposing the advertisement content in the connected web page is terminated S122, and, at the operating server, calculating and storing advertisement rates and user points, based on the time data transmitted from the user terminal S124.

The determining whether the connected web site corresponds to a designated site S102 may be so configured as to determine whether the user terminal has the same data as information on a designated web site stored in a database of the operating server, and address information on the connected web site corresponds to the stored data. Alternatively, the determining whether the connected web site corresponds to a designated site may be so configured that the user terminal transmits address information on the connected web site to the operating server, and then the operating server retrieves the received address information on the connected web site from the database so as to determine whether there is a corresponding result, and after that, the operating server transmits the result to the user terminal.

The determining whether the sensed action of the mouse is a set one S108 senses actions, which are set at the operating server or the user terminal, for example, clicking on the mouse left button once, twice, or three times.

The outputting advertisement content S112 may be so configured as to include, at the user terminal, transmitting a signal for requesting advertisement content including information on the connected web site and web page to the operating server, at the operating server, retrieving advertisement content matched with the information on the connected web site and web page from the database, based on the information on the connected web site and web page received from the user terminal, at the operating server, transmitting the retrieved advertisement content to the user terminal, and, at the user terminal, receiving the advertisement content so as to output the received advertisement content in a new window.

The determining whether exposing the full advertisement content is terminated S114 may output the full advertisement content in a new window for different lengths of time according to specifications of the user terminal or Internet communication environments. In a state in which the advertisement content is not fully exposed, checking exposure time so as to charge advertisement rates as well as calculate and accumulate user points is disadvantageous to an advertiser, so that step S114 is the one for checking exposure time from the time when the advertisement content is fully exposed in the user terminal.

The determining whether the exposure time of the advertisement content exceeds a set time S118 is, for example, the one for charging advertisement rates and accumulating user points only when the advertisement content is continuously exposed more than five seconds, considering an advertising effect.

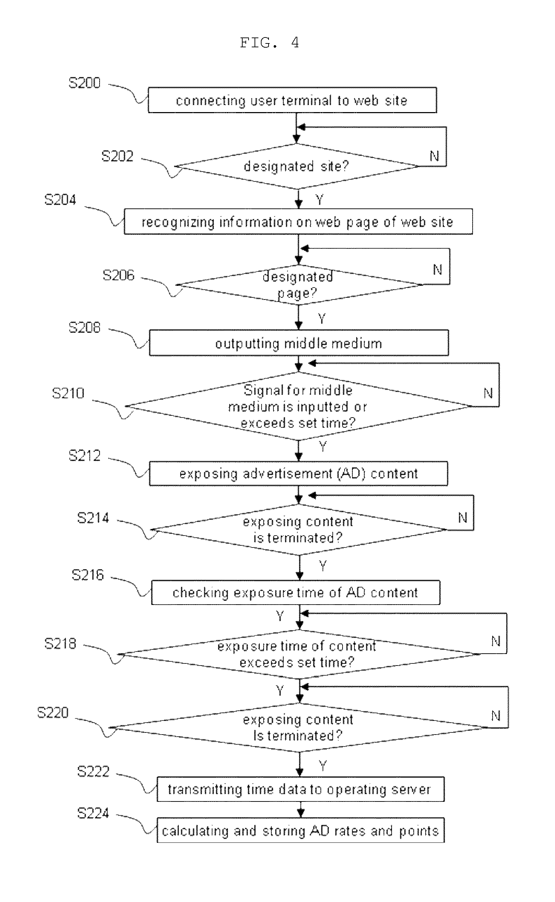

FIG. 4 illustrates a flow chart of another embodiment of a method for displaying content through recognition of a designated web site and web page. As shown in FIG. 4, the method for displaying content through recognition of a designated web site and web page of the present invention includes connecting a user terminal to any one web site S200, at the user terminal, determining whether the connected web site corresponds to a designated site stored in an operating server S202, at the user terminal, recognizing information on a currently-connected web page when the connected web site is a designated one S204, at the user terminal, determining whether the recognized web page is a designated one S206, at the user terminal, outputting a middle medium in the currently-connected web site when the web page is a designated one S208, at the user terminal, determining whether a signal for the middle medium outputted in the web site is inputted or set time passes S210, outputting advertisement content in the connected web page in a new window when the signal for the middle medium is inputted S212, at the user terminal, determining whether exposing the full advertisement content in the new window is terminated S214, at the user terminal, checking exposure time of the advertisement content when exposing the advertisement content in the new window is terminated S216, at the user terminal, determining whether the exposure time of the advertisement content exceeds set time S218, at the user terminal, determining whether exposing the advertisement content is terminated when the advertisement content is exposed more than the set time S220, at the user terminal, transmitting time data in relation to the sensed exposure time of the advertisement content to the operating server when exposing the advertisement content in the connected web page is terminated S222, and, at the operating server, calculating and storing advertisement rates and user points, based on the time data transmitted from the user terminal S224.

In the above-mentioned another embodiment of the present invention, a description of the same configuration as the embodiment in FIG. 3 is omitted.

The determining whether the recognized web page corresponds to a designated one S206 may be so configured as to determine whether the user terminal has the same data as information on a designated web page stored in a database of the operating server, and address information on the connected web page corresponds to the stored data. Alternatively, the determining whether the recognized web page corresponds to a designated one may be so configured that the user terminal transmits the address information on the connected web page to the operating server, and then the operating server retrieves the received address information on the connected web page from the database so as to determine whether there is a corresponding result, and after that, the operating server transmits the result to the user terminal.

The outputting a middle medium S208 may be so configured as to include outputting at least one among various forms of characters, which are stored in the user terminal by means of being matched with information on the designated web page, in the connected web page. In addition, the outputting a middle medium may be so configured as to include transmitting at least one among various forms of characters, which are stored in the operating server by means of being matched with information on the designated web page after the operating receives a request signal from the user terminal and, at the user terminal, outputting the at least one character form in the connected web page. Furthermore, the middle medium may be so configured as to have an animation effect that the character forms are animated in the web page.

The determining whether a signal for the middle medium is inputted or set time passes S210 may be so configured as to include, at the user terminal, sensing whether a signal of clicking on or touching the outputted middle medium is inputted, or, at the operating server 100, sensing whether time set for the middle medium passes.

In addition, when a signal for the middle medium is inputted or set time passes, the operating server 100 may order a designated event to occur in the web page, and then, when the event is terminated or another signal is inputted, the operating server 100 may transmit advertisement content so as to output the advertisement content in the web page.

The apparatus and method for displaying content through recognition of a designated web site and web page described as above is only part of various embodiments. It is apparent that the scope of the present invention includes even various embodiments including a technical idea in which at least one particular web site and web page is designated and relevant advertisement content is matched with the designated web site and web page, and then, when a user terminal senses a set mouse action within a set area, e.g. a blank margin, in a web page of the designated web site, advertisement content matched with the web page of the web site is outputted, and another technical idea in which at least one particular web site and web page is designated and relevant advertisement content is matched with the designated web site and web page, and then, when a user terminal is connected to the designated web page, a middle medium such as an animated character is outputted, and moreover, when a signal for the middle medium is inputted, advertisement content matched with the web page of the web site is outputted.

### Mode for Invention

### Industrial Applicability

An apparatus and method according to the present invention may be used as an Internet advertising medium.

## Claims

1. An apparatus for displaying content through recognition of a designated web site and web page, comprising:
an operating server which has a database storing information on at least one designated web site and web page to be outputted to a user terminal through a communication means and at least one advertisement content matched with the information on the web site and web page; and
a user program which is installed and stored in the user terminal, uses hardware resources of the user terminal so as to recognize information on the designated web site and sense a preset mouse action, and communicates with the operating server,
**characterized in that**, when the user terminal senses a preset mouse action occurring within a set area in a web page of a designated web site, the operating server outputs advertisement content matched with the web page of the designated web site to the user terminal.

2. An apparatus for displaying content through recognition of a designated web site and web page, comprising:
an operating server which has a database storing information on at least one designated web site and web page to be outputted to a user terminal through a communication means and at least one advertisement content matched with the information on the web site and web page; and
a user program which is installed and stored in the user terminal, uses hardware resources of the user terminal so as to recognize information on the designated web site, stores at least one middle medium, and communicates with the operating server,
**characterized in that**, when the user terminal is connected to a designated web site, at least one middle medium such as a character is outputted, and then, when a signal for the middle medium is inputted or set time passes, the operating server outputs advertisement content matched with the web page of the web site in the user terminal.

3. The apparatus according to the claim 1 or 2, wherein the operating server further comprises an advertisement rate charging processing unit, and calculates and stores advertisement rates in relation with the advertisement content outputted in the user terminal.

4. The apparatus according to claim 3, wherein calculating the advertisement rates is performed, based on exposure time of the advertisement content outputted in the user terminal.

5. The apparatus according to claim 1 or 2, wherein the operating server further comprises a user point managing unit, and calculates and stores user points in relation with the advertisement content outputted in the user terminal.

6. The apparatus according to claim 5, wherein calculating the user points is performed, based on exposure time of the advertisement content outputted in the user terminal.

7. The apparatus according to claim 1 or 2, wherein the user program comprises a position recognizing module which tracks and recognizes a position of a mouse pointer of the user terminal, a mouse action recognizing module which senses actions of the mouse, e.g. clicking, etc., a middle medium storing module which stores middle media that are formed in various characters and implements an animated function on a computer screen, a designated site information storing module which recognizes information on a web site and a web page to which the user terminal is connected, a time checking module which measures exposure time of advertisement content exposed in the user terminal, and a user setting module which is used to set up a mouse action, etc.

8. A method for displaying content through recognition of a designated web site and web page, comprising:
connecting a user terminal to any one web site; at the user terminal, determining whether the connected web site corresponds to a designated site stored in an operating server; at the user terminal, recognizing information on a currently-connected web page when the connected web site is a designated one; at the user terminal, sensing an action of a mouse in the connected web page; at the user terminal, determining whether the sensed mouse action is a set one; at the user terminal, determining whether a position a pointer of the mouse in the web page is a designated one when the sensed mouse action is determined as a set one; and outputting advertisement content in the connected web page when the position of the pointer of the mouse generating the action is a designated one.

9. A method for displaying content through recognition of a designated web site and web page, comprising:
connecting a user terminal to any one web site; at the user terminal, determining whether the connected web site corresponds to a designated site stored in an operating server; at the user terminal, recognizing information on a currently-connected web page when the connected web site is a designated one; at the user terminal, determining whether the recognized web page is a designated one; at the user terminal, outputting a middle medium in the currently-connected web page when the web page is a designated one; at the user terminal, determining whether a signal for the middle medium outputted in the web page is inputted or set time passes; and outputting advertisement content in the connected web page when the signal inputted for the middle medium is inputted or the set time passes.

10. The method according to claim 8 or 9, wherein, after outputting the advertisement content in the connected web page in a new window, the method comprises, at the user terminal, determining whether exposing the full advertisement content is terminated, at the user terminal, checking exposure time of the advertisement content when exposing the advertisement content is terminated, at the user terminal, determining whether the exposure time of the advertisement content exceeds set time, at the user terminal, determining whether exposing the advertisement content is terminated when the advertisement content is exposed more than the set time, at the user terminal, transmitting time data in relation to the sensed exposure time of the advertisement content to the operating server when exposing the advertisement content in the connected web page is terminated, and, at the operating server, calculating and storing advertisement rates and user points, based on the time data transmitted from the user terminal.
